# EUROPEAN PATENT APPLICATION

(11) **EP 4 201 663 A1**
(43) Date of publication of application: **28.06.2023**
(21) Application number: 21306872.9
(22) Date of filing: 21.12.2021
(51) Int. Cl.: B32B 1/00, B32B 3/12, B32B 3/14, B32B 3/16, B32B 3/18, B32B 5/02, B32B 5/18, B32B 5/24, B32B 7/05, B32B 7/12, B32B 7/14

(54) **MULTI-BLOCKS STRUCTURE AND METHOD FOR FORMING A COMPOSITE PART FROM SAID STRUCTURE**

(71) Applicant: Techni-Modul Engineering, 63114 Coudes (FR)
(72) Inventor: LUQUAIN, Serge, 63800 COURNON D'AUVERGNE (FR)
(74) Representative: Germain Maureau

(57) **Abstract**

The present invention relates to a multi-blocks structure (1) intended to be used as the core material of a composite part, comprising a plurality of elementary hexagonal columnar shaped blocks (2), arranged adjacent one another in a honeycomb-like pavement and interconnected by linking means (7, 8) to form a unitary plate (3), wherein the linking means (7, 8) are located on the first side (4) of the plate (3) and are configured to leave interspaces (6) between the blocks (2) and to authorize an angular offset of each block (2) with respect to the adjacent blocks (2), so that the plate (3) is allowed to deform from a substantially straight configuration to a curved configuration at least in the area of the offset blocks (2). The invention also relates to a composite part comprising such a multi-blocks structure and to a method for manufacturing such a composite part.

## Description

The present invention relates to a multi-blocks structure intended to be used as the core material of a sandwich-type composite part in the composite industry. The invention further relates to a composite part comprising such a multi-blocks structure and to a method for forming such a composite part.

The composite industry deals with the manufacture of parts or panels which are intended to be used in applications where lightweight and resistant wall portions are needed, such as in the transport, automotive, aeronautics or energy industries. In view of the function they will have to perform, an important requisite of these parts is that they show good mechanical properties.

In addition, depending on their destination, for example as wall portions of boat hulls, wind turbines, cars or planes bodies, these parts may need to have a shape showing a certain curvature.

When the application in which the manufactured part is intended to be used requires that the part shows a significant thickness, such as for example a thickness equal to or greater than 20 mm, inserts are provided to reduce the weight of the manufactured part while keeping its mechanical properties at a satisfactory level. In such a case, a lightweight insert is provided to form the core material of the part. This core material is sandwiched between two outer layers of laminate, these outer layers showing a good mechanical resistance, to form a sandwich-type composite part.

In order to confer to such sandwich-type composite parts good mechanical properties, it is important that all the layers of the parts be firmly maintained together. In this view, the outer layers are usually strongly adhered to the core material by means of a resin which is infused in the space between the outer layers and the core material and then cured.

Nevertheless, depending on the structure of the core material, such a manufacturing process may necessitate that additional layers be provided in the composite part. Indeed, a well-known and often used structure for the core material is the honeycomb scaffold : the plurality of empty cells of such a structure provides for the requested initial lightweight needed for the core material. A drawback of the honeycomb scaffold is that the resin infused in the composite part in order to adhere the layers together may enter the honeycomb cells and fill them. Once the resin is cured, the weight of the filled honeycomb scaffold may have increased to a point that the benefit of such a structure is lost. In order to avoid this phenomenon, a solution is to provide additional layers, such as airtight layers, between each outer layer of laminate and the core material. Such airtight layers prevent the resin to spread within the honeycomb scaffold during the manufacturing process of the composite part. Anyway, such a solution complicates the manufacture of the composite part and necessitates the use of additional materials.

Core materials may alternatively be under the form of foams, such as synthetic foams. In such cases, the foam is usually provided under the form of a plaque. When it is requested that the composite part to be made show a curvature shape, then the foam plaque needs to be machined before the step of infusing the resin is performed, so that the form of the plaque matches that of the final composite part. Such a machining step may be difficult to perform and necessitates additional equipment and working time. Such a step renders the manufacturing process of the composite part more fastidious and more costly.

To render these foam plaques more easily conformable, it has been proposed to precut these plaques so that they encompass a plurality of smaller rectangular pieces. Thanks to the plurality of smaller pieces, such precut plaques may be put in shape more easily. During the infusion step of the manufacturing process of the part, the resin may infiltrate the spaces between the pieces. Anyway, the rectangular shape of the pieces forming these plaques do not allow an homogeneous distribution of the resin throughout the plaque. In the end, such precut foam plaques do not participate very efficiently in the improvement of the structural properties of the final composite part.

There is therefore a need for a new structure intended to be used as the core material of a composite part, that would show a good conformability and would allow lightening the weight of the part on one hand, while improving its mechanical properties on the other hand, in particular that would improve the uniformity of the distribution of the mechanical properties of the final composite part. There is also the need for such a structure that would be easy to manipulate and handle during storage, transport and manufacture of a composite part.

A first aspect of the invention is a multi-blocks structure intended to be used as the core material of a composite part, said structure comprising :
- a plurality of elementary hexagonal columnar shaped blocks, the blocks being arranged adjacent one another in a honeycomb-like pavement and being interconnected by linking means to form a unitary plate, said plate having a first side and a second side, the second side opposite the first side,
   wherein
- the linking means are located on the first side of the plate and are configured to leave interspaces between the blocks and to authorize an angular offset of each block with respect to the adjacent blocks, so that the plate is allowed to deform from a substantially straight configuration to a curved configuration at least in the area of the offset blocks.

The multi-blocks structure of the invention is particularly suitable for forming the core material of a composite part. Indeed, thanks to the hexagonal shape of the blocks and to the linking means forming the unitary plate of the multi-blocks structure of the invention, the plate is allowed to deform easily in a plurality of directions from the plane of the plate, for example at least in six different directions. It is therefore particularly easy to conform the multi-blocks structure of the invention to a requested specific shape intended for the part. In particular, the multi-blocks structure of the invention can be manually conformed to a requested specific shape intended for the part, even if this specific shape is complex and includes several curvatures, for example concave or convex, and/or in different several directions. The manufacturing process of the composite part is therefore simplified.

Moreover, the hexagonal shapes of the blocks and the specific linking means of the multi-blocks structure of the invention allow the creation of interspaces extending in a plurality of directions in the plane of the unitary plate : during the infusion step of the manufacturing process of the composite part, the resin will diffuse and fill these interspaces. Once cured, the resin will bring additional rigidity to the plate in the filled interspaces. After the curing step, these interspaces filled with cured resin will therefore constitute reinforcements channels which will confer superior mechanical properties to the multi-blocks structure. In addition, thanks to the hexagonal shape of the blocks, these reinforcement channels will extend in a plurality of directions in the plane of the multi-blocks structure and will therefore allow a uniform distribution of the structural properties of the composite part.

In addition, the channels created by the interspaces lying between the hexagonal shaped blocks of the multi-blocks structure of the invention allow for a better infusion of the resin inside the core material and for a faster infusion of the outer layers of laminate during the infusion step of the manufacturing process of the composite part. As a result, the infusion time is improved. The manufacturing process is therefore made more time efficient.

It can also be noted that thanks to the presence of the hexagonal columnar shaped blocks occupying the majority of the volume of the unitary plate of the multi-blocks structure of the invention, the diffusion of the resin is restricted to the volume constituted by these interspaces. As a consequence, the amount of cured resin after the curing step is limited and it therefore confers additional mechanical resistance to the multi-blocks structure without affecting the lightweight properties of the structure. Additional airtight layers between the core material and the outer layers of laminate are therefore not necessary when the multi-blocks structure of the invention is used as the core material of a composite part. It is therefore possible to infuse the multi-blocks structure of the invention together with the outer layers of laminate during the manufacturing process of the composite part. The process is therefore streamlined.

In addition, the specific linking means of the multi-blocks structure of the invention allow an improved handling of said structure, during storage, transport and manufacturing of a composite part.

The multi-blocks structure of the invention comprises a plurality of elementary hexagonal columnar shaped blocks. By "hexagonal columnar shaped blocks", is meant, according to the present application, blocks having a shape the outer surface of which corresponds to the walls of a cell of a honeycomb scaffold. These blocks therefore substantially show six rectangular or squared faces extending along the columnar dimension, hereinafter referred to as the longitudinal faces of the blocks, and two hexagonal faces. The faces of the blocks are substantially plane and all the blocks have substantially similar dimensions. The elementary blocks are arranged adjacent one another to form a honeycomb-like pavement. Each elementary block is therefore surrounded by six other elementary blocks, with interspaces left between each elementary block and the six adjacent elementary blocks.

As an example, the longitudinal dimension of an elementary block may range from about 3 mm to about 30 mm, for example from about 6 mm to about 12 mm. As an example, the distance between two parallel sides of an hexagonal face of an elementary block may range from about 30 mm to about 40 mm.

The arrangement of the plurality of elementary hexagonal columnar shaped blocks in a pavement results in the formation of a plate which is substantially flat, i.e; which has two of its dimensions which are much more important than its third dimension. In other words, the plate formed by the plurality of blocks has a length and a width which show values much greater than that of its height. As an example, the length of the plate may range from about 600 mm to about 3000 mm and the width of the plate may range from about 500 mm to about 1500 mm. The height of the plate, which may correspond to the height of a block along its longitudinal (columnar) dimension, may range from 3 mm to 30 mm, for example from 6 mm to 12 mm.

As an example, the plate of a multi-blocks structure of the invention may comprise from about 800 to about 1000 elementary blocks per square meter, arranged in a pavement.

The plate has a first side and a second side. The second side is opposite the first side. The arrangement in a pavement of a plurality of elementary hexagonal columnar shaped blocks having substantially similar dimensions results in the sides of the plate showing substantially plane surfaces.

The plate formed by the plurality of elementary blocks of the multi-structure of the invention is made unitary by means of linking means interconnecting the totality of the blocks together. The linking means are located on the first side of the plate and they are configured to leave interspaces between the blocks and to authorize an angular offset of each block with respect to the adjacent blocks, so that the plate is allowed to deform from a substantially straight configuration to a curved configuration at least in the area of said offset blocks.

The interspaces left between the blocks by the linking means are preferably dimensioned to authorize a relative movement of the blocks with respect to each other in a way that:
- on the first side of the plate, where the linking means are located, each side of the hexagonal face of an elementary block is allowed to move from a position in which it contacts the facing side of the hexagonal face of an adjacent elementary block to a position in which it is separated from said facing side of the hexagonal face of the adjacent elementary block by a distance corresponding to the width dimension of the interspace when the plate is in a straight configuration,
- on the second side of the plate, each side of the hexagonal face of an elementary block is allowed to move from a position in which it contacts the facing side of the hexagonal face of an adjacent elementary block to a position in which it is separated from said facing side of an hexagonal face of an adjacent elementary block by a distance greater than the width dimension of the interspace when the plate is in a straight configuration.

As an example, in the straight configuration of the plate, the width dimension of the interspace, i.e. the distance between a longitudinal face of an elementary block to the facing longitudinal face of an adjacent elementary block, may be between about 0.1% and about 10%, preferably between about 0.1% and about 5%, of the distance between two parallel sides of an hexagonal face of an elementary block.

Thanks to these interspaces, each elementary block is allowed to move relative to an adjacent block so that their facing longitudinal faces form an angle, the vertex of the angle being located on the first side of the plate.

An angular offset of each elementary block with respect to the adjacent elementary blocks is therefore authorized and the plate is able to adopt a deformed configuration, such as a curved configuration, in the area of the offset blocks. The arrangement of the linking means therefore allows the plate to be easily conformed to one or several curvature shapes, both convex or concave.

In embodiments, the linking means comprise a fibers arrangement connecting the blocks together. The fibers arrangement may be for example a knit, a woven fabric or non-woven fabric. By "fibers" is meant in the present application cut fibers, yarns, filaments, and combinations thereof.

A fibers arrangement allows connecting the blocks together in a flexible way allowing the relative movement of the blocks with respect to each other as described above, while maintaining the integrity and the continuity of the form of the plate.

In embodiments, the linking means further comprise adhesive means attaching the fibers arrangement to the faces of the blocks forming the first side of the plate. The adhesive means may be selected from glue, resin, a thermoplastic veil, and combinations thereof. The resin or the glue may for example be applied under the form of a powder or may be pulverised.

The adhesive means may be distributed on the first side of the plate at occasional points or under the form of an adhesive layer, as long as they maintain the flexibility of the plate.

In embodiments, the fibers arrangement is a woven mat, said woven mat being adhered to the faces of the blocks forming the first side of the plate.

In embodiments, each block is provided with an adhesive point on its face forming part of the first side of said plate, and the fibers arrangement comprises a roving of filaments comprising a first set of parallel filaments extending in a first direction and a second set of parallel filaments extending in a second direction, different from said first direction, each filament of the first set of filaments connecting all the elementary blocks aligned on said first direction by being successively fixed to the adhesive points of the elementary blocks aligned on said first direction, each filament of the second set of filaments connecting all the elementary blocks aligned on said second direction by being successively fixed to the adhesive points of the elementary blocks aligned on said second direction.

In embodiments, the first direction may correspond to the width direction of the plate and the second direction may correspond to the length direction of the plate. In such an embodiment, the first set of filaments may extend perpendicularly with respect to the second set of filaments, two filaments crossing each other on each adhesive point.

In other embodiments, the first direction may be a direction perpendicular to two parallel sides of an hexagonal face of the elementary blocks, and the second direction may correspond to a direction perpendicular to two other parallel sides of the hexagonal face of the elementary blocks, two filaments crossing each other on each adhesive point.

The filaments therefore hold the totality of the blocks together, thereby ensuring the unity of the plate. Such embodiments allow using a limited amount of fibers. The resin may for example be an epoxy resin.

The filaments may be selected from glass filaments, carbon filaments, para-aramid filaments and combinations thereof. In a preferred embodiment, the filaments are glass filaments. Glass filaments show a good mechanical resistance particularly suitable for ensuring the integrity of the plate. Glass filaments further constitute a cost effective means for maintaining the integrity of the plate.

In combination or alternatively, the linking means may comprise a plurality of breakable bridges connecting the blocks together. Such breakable bridges are located on the first side of the plate and they for example punctually connect one side of the hexagonal face of an elementary block to the facing side of the hexagonal face of the adjacent elementary block. Such breakable bridges have a rigidity sufficient to hold all the blocks together and to maintain the unitary of the plate during handling and transport of the plate. The breakable bridges further show a fragility allowing them to be easily broken when time has come to conform the plate to a specific shape such as a curved shape. The breakable bridges are configured so that a weak force or pressure is enough to break them and to separate the blocks during the lay up of the multi-blocks structure in a mould during the manufacturing process of the composite part. The breakable bridges and the elementary blocks may be made from the same material.

In embodiments, the linking means may comprise the combination of a fibers arrangement and of a plurality of bridges connecting the elementary blocks together : in such embodiments, a fibers arrangement and a plurality of bridges connecting the blocks together are located on the first side of the unitary plate.

In embodiments, the linking means may consist in a plurality of breakable bridges connecting the blocks together. In such a case, no fibers arrangement is present on the first side of the unitary plate. In such embodiments, a fibers arrangement, such as the fibers arrangement described above, may be present on the second side of the unitary plate to help handling the plate. Therefore, in embodiments, where the linking means consist in a plurality of breakable bridges connecting the blocks together, a fibers arrangement may be present on the second side of the unitary plate. Such a fibers arrangement should be configured so as to not prevent the deformation of the plate from a substantially straight configuration to the curved configuration.

The elementary blocks of the multi-structure of the invention are preferably made from a lightweight material. In the present application, by "lightweight material" is meant a material showing a volumetric mass of less than about 100 kg/m³. For example, the elementary blocks are made of a lightweight material selected from wood, foam, and combinations thereof. The foam may be synthetic or not. Synthetic foam may be made of a polymeric material selected from polyvinyl chloride, polyurethane, and combinations thereof. The foam is preferably a closed cells foam. In a preferred embodiment, the elementary blocks are made of a closed cells polyvinyl chloride foam.

The elementary blocks may be obtained from an initial foam plaque in which the hexagonal columnar shaped blocks are cut.

In the embodiment where the blocks of the multi-blocks structure of the invention are connected together by means of breakable bridges as described above, the initial foam plaque is only partially cut. During the manufacture and the cutting of the blocks, a part of the foam material is left on the side of the plaque that will constitute the first side of the unitary plate of the multi-blocks structure of the invention. The cutting may be performed according to cutting processes well known in the art, like for example punching. The left part of foam material will constitute the breakable bridges. In such embodiments, therefore, the breakable bridges and the elementary blocks are made of the same material.

The multi-blocks structure of the invention as described above may form the core material of a sandwich-type composite part as needed in the composite industry. If needed, depending on the thickness of the composite part to be manufactured, several multi-blocks structures as described above may be used and laid up on top of each other to form the core material of the composite part.

Another object of the invention is a composite part comprising a core material comprising at least one multi-blocks structure as described above.

Another object of the invention is a method for forming a composite part as described above, comprising the following steps :
- laying up in a backing mould at least one multi-blocks structure as described above and at least two outer layers of laminate so that said multi-blocks structure(s) is/are sandwiched between said two outer layers,
- applying a vacuum bag thereon,
- introducing a resin inside the vacuum bag under conditions allowing the infusion of the resin within the multi-blocks structure(s) and the outer layers of laminate,
- curing the resin.

In the method of the invention, a backing mould is first provided. Depending on the destination of the composite part to be manufactured, the backing mould may show a three dimensional geometry such as curved surfaces.

A first outer layer of laminate is laid up on the backing mould's surface. The multi-blocks structure of the invention is then applied onto this first outer layer of laminate. Thanks to the specific linking means of the multi-blocks structure of the invention, the handling of the multi-block structure is particularly facilitated. A second outer layer of laminate is then laid up onto the multi-blocks structure of the invention. Thanks to the specific shape of the elementary blocks and to the specific linking means interconnecting these blocks to form a unitary flexible plate, the multi-blocks structure of the invention can easily be shaped, for example manually, onto the surface and fit the three dimensional geometry of the backing mould. The plate format of the multi-blocks structure of the invention allows for fast layup over vast areas. Several layers of multi-blocks structures of the invention may be applied to reach the desired core material thickness of the composite part to be manufactured.

In embodiments where the elementary blocks are connected together thanks to breakable bridges, a weak force or pressure applied on the unitary plate during the lay up of the multi-blocks structure(s) of the invention in the backing mould is sufficient to break the bridges and allow the plate to conform to the geometry of the backing mould.

In addition, as explained above, thanks to the plurality of blocks occupying the majority of the volume of the multi-blocks structure of the invention, there is no need for extra materials such as airtight layers. The multi-blocks structure(s) of the invention may be laid up directly on the laminate.

The laying up step of the manufacturing method of the invention is therefore particularly simple and time efficient.

Once the laying up is completed, a vacuum bag is applied onto the second outer layer of laminate and a resin is introduced under conditions allowing the infusion of the resin within the multi-blocks structure(s) and the outer layers of laminate.

For example, the resin used for the infusion step may be selected from epoxy resins, vinyl ester resins or poly ester resins. The conditions for the infusion of the resin are conventional and well known from one skilled in the art for the methods such as resin transfer molding and infusion process.

As described above, during this step, the resin diffuses inside the multi-blocks structure of the invention and fills in the interspaces between the elementary blocks. These interspaces act as channels during this step, which favour the diffusion of the resin and promote a faster infusion of the outer laminate layers. The use of a closed cells foam, such as a closed cells polyvinyl chloride foam for manufacturing the elementary blocks, allows preventing the resin to fill in the inside of the elementary blocks, thereby maintaining the lightweight properties of the multi-blocks structure(s) of the invention.

Once the resin is distributed and has filled all the interspaces and the space between the laminate and the multi-blocks structure of the invention, the curing step is performed. The conditions of the curing step are conventional and well known from one skilled in the art.

The curing of the resin transforms the filled channels in an internal reinforcement scaffold providing mechanical properties in all directions of the multi-blocks structure forming the core material of the composite part.

As a result, the obtained composite part shows superior mechanical properties and these mechanical properties are uniformly distributed throughout the part.

The obtained composite part may be used in the composite industry to form lightweight and mechanical resistant wall portions, for example for the automotive, energy, aeronautics, transport industries. Such composite parts may for example be used in the manufacture of boat hulls, wind turbine wings, etc...

The invention and the advantages arising therefrom will clearly emerge from the detailed description that is given below with reference to the appended drawings as follows:
Figure 1 is a perspective view of an embodiment of the multi-block structure of the invention when the plate is in a straight configuration,
Figure 2 is a perspective exploded view of a composite part comprising the multi-blocks structure of Figure 1 as core material,
Figure 3 is a cross section view of the multi-block structure of Figure 1 when the plate is in a curved configuration,
Figure 4 is a perspective view of the view of the multi-block structure of Figure 3,
Figure 5 is a top view of another embodiment of a multi-block structure of the invention,
Figure 6 is a top view of another embodiment of a multi-block structure of the invention,
Figure 7 is a detail view of the view of Figure 6.

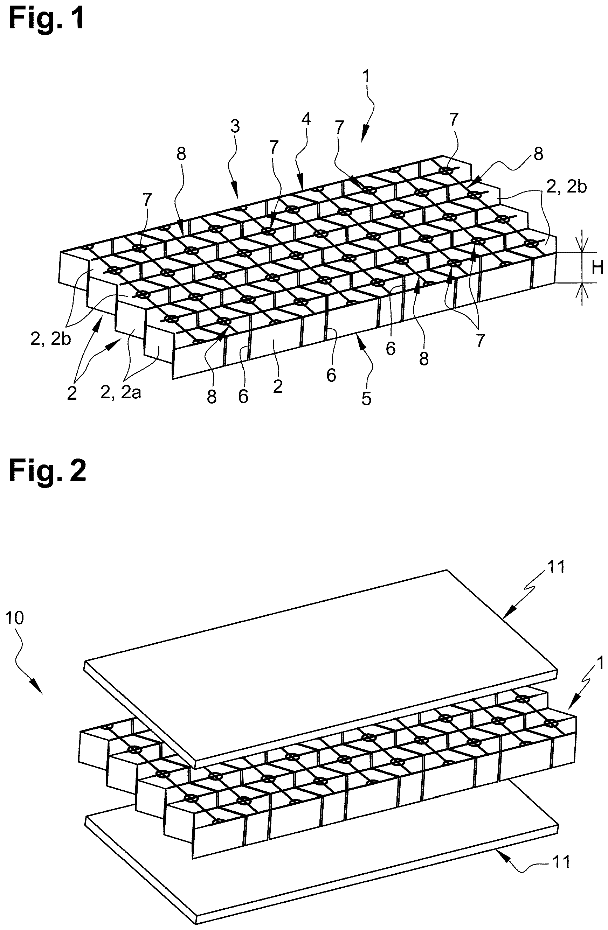

With reference to Figure 1 is shown a multi-blocks structure 1 of the invention, intended to form the core material of a composite part 10 (see Figure 2) useful in the composite industry. The multi-blocks structure 1 comprises a plurality of elementary blocks 2. Each elementary block 2 has an hexagonal columnar shape showing six longitudinal faces 2a and two hexagonal faces 2b, only the upper hexagonal faces 2b being visible on Figure 1. As appears from this figure, the faces (2a, 2b) of the elementary blocks 2 are substantially plane surfaces.

The plurality of elementary blocks 2 are arranged adjacent one another in a honeycomb-like pavement. In other words, each elementary block 2 is surrounded by six adjacent elementary blocks 2. Each elementary block 2 is separated from the adjacent elementary blocks 2 by an interspace 6. The plurality of elementary blocks 2 have substantially similar dimensions so that their arrangement in a pavement results in the formation of a plate 3 having a first side 4 and a second side 5, opposite the first side 4, the surfaces of which are substantially plane. In Figure 1, the plate 3 is in a straight configuration, i.e; all the elementary blocks 2 are positioned substantially parallel to each other.

As an example, the longitudinal dimension H of an elementary block 2 may range from about 3 mm to about 30 mm, for example from about 6 mm to about 12 mm. On the example shown, the longitudinal dimension H of an elementary block 2 corresponds to the height of the plate 3. The plate 3 is substantially flat and its length and width are of greater dimensions than its height. The length and the width of the plate 3 are chosen in function of the destination of the composite part intended to include the plate 3 as core material. As an example, the length of the plate 3 may range from about 600 mm to about 3000 mm and the width of the plate may range from about 500 mm to about 1500 mm.

The plate 3 is therefore formed of a plurality of parallel rows of elementary blocks 2 and a plurality of parallel columns of elementary blocks 2, where a row of elementary blocks 2 extends in the width direction of the plate 3, and a column of elementary blocks 2 extends in the length direction of the plate 3.

As an example, the distance between two parallel sides of the hexagonal face 2b of an elementary block 2 may range from about 30 mm to about 40 mm. The number of elementary blocks 2 forming the plate 3 is function of the dimensions of the sides of the hexagonal faces 2b of the blocks 2, of the width of the interspaces 6 between the elementary blocks 2 and of the desired length and width for the plate 3. As an example, the plate 3 may comprise from about 800 to about 1000 elementary blocks 2 per square meter.

The hexagonal faces 2b of the elementary blocks 2 forming the first side 4 of the plate 3 are provided with a resin drop 7 in their center. The resin may be for example an epoxy resin. Such resin drops 7 constitute adhesive points. The multi-blocks structure 1 is further provided with a roving of filaments 8 configured so that two filaments 8 cross each other on each resin drop 7, each filament 8 connecting either all the elementary blocks 2 aligned in a row or all the elementary blocks 2 aligned in a column of the plate 3, by being successively fixed to the resin drops 7 of said row or column. As appears from Figure 1, the filaments 8 are present as a first set of parallel filaments 8 extending along the width direction of the plate 3 and as a second set of filaments 8 extending perpendicularly with respect to that first set, i.e. along the length direction of the plate 3. The filaments 8 hold the totality of the elementary blocks 2 together and ensure the unity of the plate 3, while leaving interspaces 6 between the elementary blocks 2.

The interspaces 6 are dimensioned so that, in cooperation with the filaments 8, they allow each elementary block 2 to move with respect to the adjacent elementary blocks 2 in a way that:
- on the first side 4 of the plate 3, where the filaments 8 are present and hold all the elementary blocks 2 together, each side of the hexagonal face 2b of an elementary block 2 is allowed to move from a position in which it contacts the facing side of the hexagonal face 2b of an adjacent elementary block 2 to a position in which it is separated from said facing side of the hexagonal face 2b of the adjacent elementary block 2 by a distance corresponding to the width dimension of the interspace 6 when the plate 3 is in a straight configuration,
- on the second side 5 of the plate 3, which in this example is free of any means connecting the hexagonal faces of the elementary blocks 2 together, each side of the hexagonal face of an elementary block 2 is allowed to move from a position in which it contacts the facing side of the hexagonal face of an adjacent elementary block 2 to a position in which it is separated from said facing side of an hexagonal face of an adjacent elementary block 2 by a distance greater than the width dimension of the interspace 6 when the plate 3 is in a straight configuration.

With respect to Figure 1, the interspaces 6 may all have substantially the same width. As an example, in the straight configuration of the plate 3 as shown in Figure 1, the width dimension of the interspaces 6 may be between about 0.1% and about 5% of the distance between two parallel sides of an hexagonal face 2b of an elementary block 2.

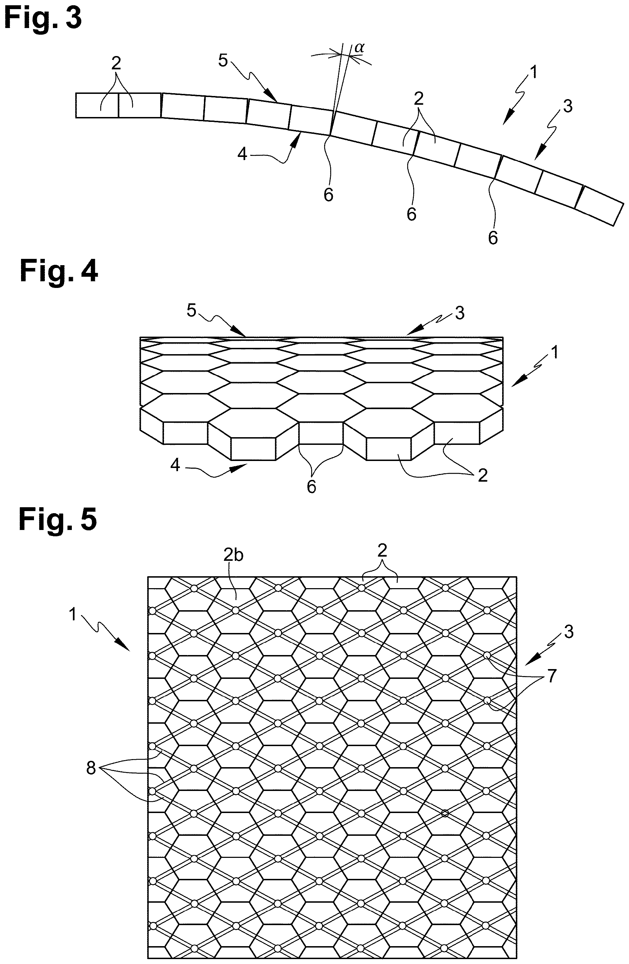

With reference to Figures 3 and 4, which show the plate 3 of Figure 1 in the curved configuration, the presence of the interspaces 6 and of the roving of filaments (not shown on these Figures) as described above allows each elementary block 2 to move relative to an adjacent block 2 so that their facing longitudinal faces form an angle α, the vertex of the angle α being located on the first side 4 of the plate 3. An angular offset of each elementary block 2 with respect to the adjacent elementary blocks is therefore authorized and the plate 3 is therefore able to adopt a deformed configuration, such as a curved configuration, in the area of the offset blocks.

The plate 3 may therefore be conformed to several curvature shapes, either convex or concave.

The filaments 8 may be selected from glass filaments, carbon filaments, para-aramid filaments and combinations thereof. In a preferred embodiment, the filaments are glass filaments. Glass filaments show a good mechanical resistance particularly suitable for ensuring the integrity of the plate 3.

The roving of filaments 8 and the resin drops 7 shown in Figure 1 constitute linking means located on the first side 4 of the plate 3 and configured to leave interspaces 6 between the blocks 2 and to authorize an angular offset of each block 2 with respect to the adjacent blocks.

With reference to Figure 5, is shown another embodiment of the multi-blocks structure 1 similar to that of Figure 1, in which the first set of filaments 8 is extending in a direction perpendicular to two parallel sides of an hexagonal face 2b of the elementary blocks 2, and the second set of filaments 8 is extending in a direction perpendicular to two other parallel sides of the hexagonal face 2b of the elementary blocks 2.

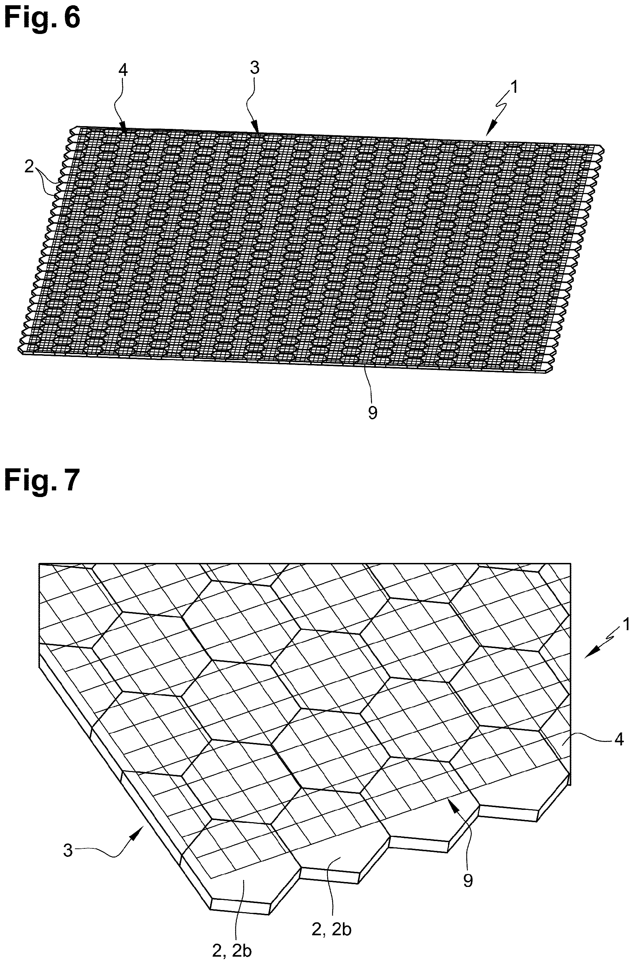

With reference to Figures 6 and 7, is shown another embodiment of the multi-blocks structure 1 of the invention, in which the linking means comprise another type of fibers arrangement, such as a woven fabric 9. The elements of the multi-blocks structure of Figures 6 and 7 which are identical to that of Figure 1 are designated by the same references. In the embodiment shown in these Figures 6 and 7, the woven fabric 9 is not adhered to the faces 2b of the elementary blocks 2 by means of discrete resin drops but by means of the pulverisation of resin or glue or by means of a thermoplastic powder, over the whole surface of the first side 4 of the plate 3.

In other embodiments not shown, the linking means may comprise a plurality of breakable bridges connecting the blocks together. In such a case, a fibers arrangement could be present on the second side of the plate.

The elementary blocks 2 of the multi-structure 1 of Figure 1 are preferably made from a lightweight material, such as wood or a foam, synthetic or not. The foam is preferably a closed cells foam. In a preferred embodiment, the elementary blocks 2 may be made of a closed cells polyvinyl chloride foam.

With reference to Figure 2 is shown an exploded view of a composite part 10 of the invention, comprising the multi-blocks structure 1 of Figure 1. The composite part 10 comprises the multi-blocks structure 1 as a core material, sandwiched between two outer layers of laminate 11.

As an example, the laminates 11 may be made from glass fibers, carbon fibers, para-aramid fibers, hemp fibers and combinations thereof.

Such a composite part 10 may be manufactured as follows. A first outer layer of laminate 11 is laid up in an adequate backing mould (not shown). The multi-blocks structure 1 of Figure 1 is then positioned on top of the first outer layer of laminate 11. A second outer layer of laminate 11 is then laid up onto the multi-blocks structure 1. A vacuum bag (not shown) is applied on top of the second outer layer of laminate 11 and the resin is infused. Thanks to the interspaces 6 of the plate 3, the resin diffuses throughout the whole multi-blocks structure 1. The interspaces 6 act as channels during this step, which favour the diffusion of the resin and promote a faster infusion of the laminates 11. The resin is then cured. The curing of the resin transforms the filled interspaces 6 in an internal reinforcement scaffold providing mechanical properties in all directions of the multi-blocks structure 1 forming the core material of the composite part 10. The obtained composite part 10 shows superior mechanical properties and these mechanical properties are uniformly distributed throughout the part 10.

As explained in the above description, should the intended composite part comprise curved shapes, the hexagonal shape of the elementary blocks 2 and the specific linking means forming the unitary plate 3 of the multi-blocks structure 1 of the invention allow said plate 3 to be easily and manually conformed to a three dimensional geometry of the backing mould. Moreover, depending on the expected thickness of the composite part, several layers of multi-blocks structure 1 of Figure 1 may be used on top of each other to form the core material of the composite part.

The obtained composite part may be useful in applications where light and mechanical resistant wall portions or panels are needed, such as the automotive, energy, aeronautics, transport industries.

## Claims

1. Multi-blocks structure (1) intended to be used as the core material of a composite part (10), said structure (1) comprising :
- a plurality of elementary hexagonal columnar shaped blocks (2), the blocks (2) being arranged adjacent one another in a honeycomb-like pavement and being interconnected by linking means (7, 8) to form a unitary plate (3), said plate (3) having a first side (4) and a second side (5), the second side (5) opposite the first side (4),
wherein
- the linking means (7, 8) are located on the first side (4) of the plate (3) and are configured to leave interspaces (6) between the blocks (2) and to authorize an angular offset of each block (2) with respect to the adjacent blocks (2), so that the plate (3) is allowed to deform from a substantially straight configuration to a curved configuration at least in the area of the offset blocks (2).

2. Multi-blocks structure (1) of claim 1, wherein the linking means comprise a fibers arrangement (8) connecting the blocks (2) together.

3. Multi-blocks structure of claim 2, wherein the linking means further comprise adhesive means (7) attaching the fibers arrangement (8) to the faces (2b) of the blocks (2) forming the first side (4) of the plate (3).

4. Multi-blocks structure (1) of claim 3, wherein the fibers arrangement is a woven mat, said woven mat being adhered to the faces of the blocks forming the first side of the plate.

5. Multi-blocks structure (1) of claim 3, wherein each block (2) being provided with an adhesive point (7) on its face (2b) forming part of the first side (4) of said plate (3), the fibers arrangement comprises a roving of filaments (8) comprising a first set of parallel filaments (8) extending in a first direction and a second set of parallel filaments (8) extending in a second direction, different from said first direction, each filament (8) of the first set of filaments connecting all the elementary blocks (2) aligned on said first direction by being successively fixed to the adhesive points (7) of the elementary blocks (2) aligned on said first direction, each filament (8) of the second set of filaments connecting all the elementary blocks (2) aligned on said second direction by being successively fixed to the adhesive points (7) of the elementary blocks (2) aligned on said second direction.

6. Multi-blocks structure (1) of claim 5, wherein the adhesive point (7) is an epoxy resin.

7. Multi-blocks structure (1) of claim 5 or 6, wherein the filaments (8) are selected from glass filaments, carbon filaments, para-aramid filaments and combinations thereof, and preferably the filaments (8) are glass filaments.

8. Multi-blocks structure (1) of any one of claims 1 to 7, wherein the elementary blocks are made of a lightweight material, for example selected from wood, foam, and combinations thereof.

9. Multi-blocks structure (1) of any one of claims 1 to 8, wherein the linking means comprise a plurality of breakable bridges connecting the blocks together.

10. Multi-blocks structure (1) of any one of claims 1 to 9, wherein the linking means comprise the combination of a fibers arrangement and of a plurality of bridges connecting the elementary blocks (2).

11. Multi-blocks structure (1) of claim 9, wherein the linking means consisting in a plurality of breakable bridges connecting the blocks together, a fibers arrangement is present on the second side of the unitary plate.

12. Multi-blocks structure (1) of any one of claims 1 to 11, wherein the elementary blocks (2) are made of a closed cells polyvinyl chloride foam.

13. Multi-blocks structure (1) of any one of claims 9 to 12, wherein the breakable bridges and the elementary blocks are made of the same material.

14. Composite part (10) comprising a core material comprising at least one multi-blocks structure (1) according to any one of claims 1 to 13.

15. Method for forming a composite part (10) comprising at least one multi-blocks structure (1) according to any one of claims 1 to 13 as core material, said method comprising the following steps :
- laying up in a backing mould at least one multi-blocks structure (1) according to claims 1 to 13 and at least two outer layers of laminate (11) so that said multi-blocks structure(s) (1) is/are sandwiched between said two outer layers,
- applying a vacuum bag thereon,
- introducing a resin inside the vacuum bag under conditions allowing the infusion of the resin within the multi-blocks structure(s) (1) and the outer layers of laminate,
- curing the resin.
